# EUROPEAN PATENT APPLICATION

(11) **EP 4 300 663 A1**
(43) Date of publication of application: **03.01.2024**
(21) Application number: 22204394.5
(22) Date of filing: 28.10.2022
(51) Int. Cl.: H01M 50/103, H01M 50/474, H01M 50/531, H01M 50/112, H01M 50/15, H01M 50/477

(54) **BATTERY**

(30) Priority: 28.06.2022 CN 202210751880
(71) Applicant: CALB Co., Ltd., Changzhou City, Jiangsu Province (CN)
(72) Inventor: XU, Jiuling, Changzhou City, Jiangsu Province (CN); ZHANG, Yongjie, Luoyang City, Henan Province (CN); LIU, Ruijian, Changzhou City, Jiangsu Province (CN); ZHAO, Hao, Changzhou City, Jiangsu Province (CN); ZHANG, Lulu, Changzhou City, Jiangsu Province (CN)
(74) Representative: Becker, Eberhard

(57) **Abstract**

A battery includes a battery casing (10), a first cell (20), and a second cell (30). A partition structure is arranged in the battery casing (10). The first cell (20) is arranged in the battery casing (10), and at least a part of the first cell (20) is located on a first side of the partition structure. The second cell (30) is arranged in the battery casing (10), and at least a part of the second cell (30) is located on a second side of the partition structure, and the first side and the second side are oppositely arranged, such that the first cell (20) and the second cell (30) are arranged in a first direction (A). The partition structure is formed with a communication channel (11) penetrating the first side and the second side.

## Description

### BACKGROUND

### Technical Field

The present disclosure relates to the technical field of batteries, and in particular, to a battery.

### Description of Related Art

In the related art, a plurality of cells may be arranged inside a battery casing. Due to the limitation of the casing structure, communication between internal environment of the plurality of cells might not be achievable, which affects the performance of the battery.

### SUMMARY

The present disclosure provides a battery.

The present disclosure provides a battery. The battery includes a battery casing, a first cell, and a second cell. A partition structure is arranged in the battery casing. The first cell is disposed in the battery casing, and at least a part of the first cell is located on a first side of the partition structure. The second cell is disposed in the battery casing, and at least a part of the second cell is located on a second side of the partition structure, and the first side and the second side are disposed opposite to each other, such that the first cell and the second cell are arranged in a first direction. The partition structure is formed with a communication channel, and the communication channel penetrates the first side and the second side.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural diagram of a battery from a perspective according to an exemplary embodiment.
FIG. 2 is a schematic structural diagram of a battery from another perspective according to an exemplary embodiment.
FIG. 3 is an exploded schematic diagram of a battery according to an exemplary embodiment.
FIG. 4 is a schematic structural diagram of a second casing member of a battery according to an exemplary embodiment.
FIG. 5 is a schematic structural diagram of a first cell and a second cell of a battery according to an exemplary embodiment.
FIG. 6 is a schematic structural diagram of a battery according to another exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

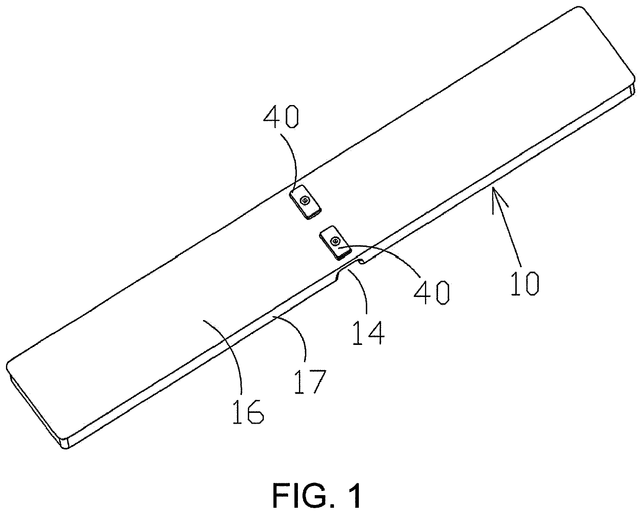

An embodiment of the present disclosure provides a battery, please refer to FIG. 1 to FIG. 6. The battery includes a battery casing 10, a first cell 20, and a second cell 30. A partition structure is arranged in the battery casing 10. The first cell 20 is provided in the battery casing 10, and at least a part of the first cell 20 is located on a first side of the partition structure. The second cell 30 is disposed in the battery casing 10, and at least a part of the second cell 30 is located on a second side of the partition structure, and the first side and the second side are arranged opposite to each other, such that the first cell 20 and the second cell 30 are arranged in a first direction A. The partition structure is formed with a communication channel 11, and the communication channel 11 penetrates the first side and the second side.

The battery in an embodiment of the present disclosure includes a battery casing 10, a first cell 20 and a second cell 30. The first cell 20 and the second cell 30 are arranged in the battery casing 10 to meet the capacity requirement of the battery, and the difficulty of forming the cell may be reduced for batteries with larger capacity requirements, thereby improving the performance of the battery. The battery casing 10 is provided with a partition structure therein. The first cell 20 and the second cell 30 are respectively located on the first side and the second side of the partition structure. Through the configuration that the partition structure is formed with a communication channel 11, and the communication channel 11 penetrates the first side and the second side, the internal environment of the first cell 20 and the second cell 30 may be kept in communication, so that the electrolyte or gas in the internal environment of the first cell 20 and the second cell 30 may be kept substantially the same. In this way, it may be ensured that the internal consistency of the battery is high, so as to improve the internal cycle performance of the battery, thereby ensuring the overall service life of the battery.

It should be noted that the battery includes a cell and an electrolyte, which is the minimum unit capable of performing electrochemical reactions such as charging/discharging. The cell refers to a unit formed by winding or laminating a stack portion including a first electrode, a separator and a second electrode. When the first electrode is a positive electrode, the second electrode is a negative electrode, and the polarities of the first electrode and the second electrode are interchangeable.

The first cell 20 and the second cell 30 are arranged in the first direction A, that is, the first cell 20 and the second cell 30 may form a structure arranged left and right, thereby increasing the overall length of the cell unit. During the independent forming process for the first cell 20 and the second cell 30, it is possible to avoid forming cells with longer lengths, which may not only improve the forming efficiency, but also improve the accuracy after forming, so as to ensure the performance of the cell units formed subsequently.

The battery casing 10 is provided with the partition structure therein. The partition structure is formed with a communication channel 11. The communication channel 11 penetrates the first side and the second side, such that the internal environment of the first cell 20 and the second cell 30 may be in communication with the communication channel 11 to ensure that the overall consistency of the battery is better.

When the battery is injected with electrolyte, due to the existence of the communication channel 11, the infiltration rate of the electrolyte may be substantially the same, thereby ensuring that the electrolyte can quickly and fully infiltrate the inside of the first cell 20 and the second cell 30. Moreover, even if the expansion conditions of the first cell 20 and the second cell 30 are different, during the charging and discharging process of the battery, even if the heat production of the first cell 20 and the second cell 30 is different, rapid heat transfer may be achieved through the communication channel 11, so as to ensure that the heat of the first cell 20 and the second cell 30 is basically balanced, thereby improving the safety performance of the battery.

In this embodiment, due to the existence of the communication channel 11, the first cell 20 and the second cell 30 are communicated with each other, and the gas and the electrolyte may be conducted through the communication channel 11, so that the overall performance of the battery is uniform and the electrolyte allows thorough infiltration. When thermal runaway occurs inside the battery, the gas is evenly discharged out of the battery in a timely manner to avoid serious thermal runaway inside the battery.

In an embodiment, the communication channel 11 may be a groove, or the communication channel 11 may be a through hole. In a second direction B, the length of the groove is smaller than the length of the partition structure, and the first direction A is perpendicular to the second direction B. In the second direction B, the length of the through hole may be smaller than the length of the partition structure, or the length of the through hole may be equal to the length of the partition structure.

In an embodiment, the communication channel 11 penetrates the first side and the second side in the first direction A, that is, the direction in which the communication channel 11 penetrates the first side and the second side may be parallel to the first direction A, that is, in the first direction A, the length of the communication channel 11 may be relatively small, which not only facilitates the communication between the first cell 20 and the second cell 30, but also allows fast realization of the balance of electrolyte and gas in the internal environment of the first cell 20 and the second cell 30.

In some embodiments, it is not excluded that the direction in which the communication channel 11 penetrates the first side and the second side may be inclined to the first direction A.

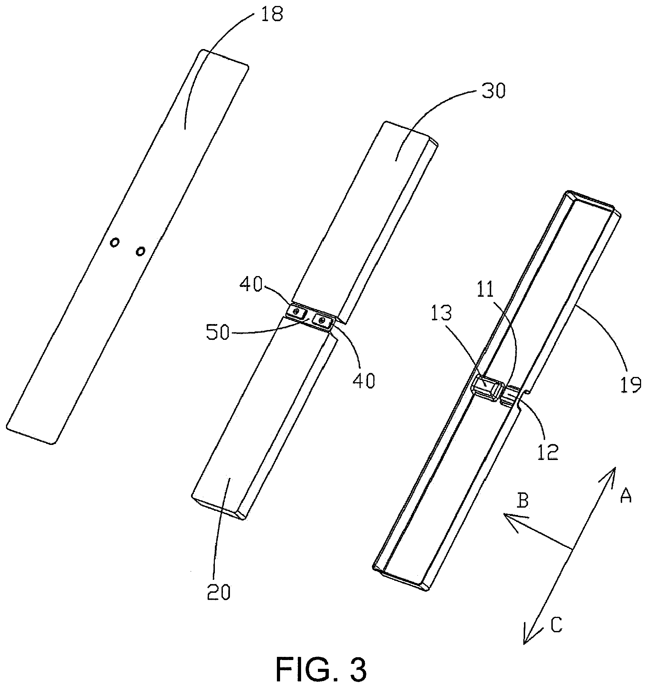

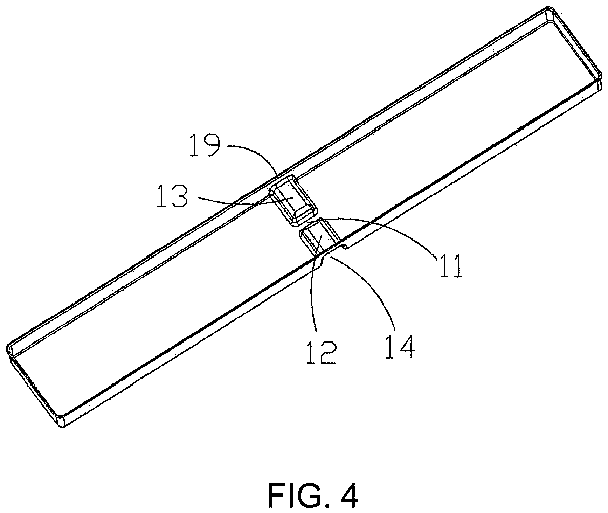

In an embodiment, as shown in FIG. 3 and FIG. 4, the communication channel 11 separates the partition structure into a first part 12 and a second part 13 independent from each other, and the first part 12 and the second part 13 are arranged at intervals in the second direction B. In this manner, the communication channel 11 may more conveniently realize the communication between the first cell 20 and the second cell 30, so as to ensure that the gas and the electrolyte may be conducted through the communication channel 11, so that the overall performance of the battery is uniform, the electrolyte allows thorough infiltration, and the gas is evenly discharged out of the battery in a timely manner to avoid serious thermal runaway inside the battery.

In an embodiment, in the second direction B, the length of the communication channel 11 is less than the length of the first part 12, and the length of the communication channel 11 is less than the length of the second part 13, such that the first part 12 and the second part 13 may reliably separate the first cell 20 and the second cell 30, and it may also be ensured that the communication channel 11 may sufficiently allow communication of the first cell 20 and the second cell 30.

The length of the communication channel 11 is less than the length of the first part 12, and the length of the communication channel 11 is less than the length of the second part 13, so that the first part 12 and the second part 13 may improve the strength of the battery casing 10.

In an embodiment, in the second direction B, the length of the first part 12 is equal to the length of the second part 13, which not only facilitates the formation of the first part 12 and the second part 13, but also ensures the uniformity of the structure, thereby ensuring that the strength of the battery casing 10 is relatively uniform, so as to improve the overall strength of the battery casing 10.

In an embodiment, the first direction A is perpendicular to the second direction B, which not only facilitates the arrangement of the first cell 20 and the second cell 30 in the battery casing 10, but also effectively utilizes the internal space of the battery casing 10. The first part 12 and the second part 13 will not take up too much internal space of the battery casing 10, so as to improve the space utilization rate of the battery casing 10 and improve the energy density of the battery.

In an embodiment, as shown in FIG. 1 to FIG. 4, the same outer surface of the battery casing 10 is provided with a first recess 14 and a second recess 15. The first recess 14 and the second recess 15 are arranged at intervals, and the first recess 14 and the second recess 15 respectively correspond to the first part 12 and the second part 13. The first recess 14 and the first part 12 are respectively located on the outer surface and the inner surface of the battery casing 10, and the second recess 15 and the second part 13 are respectively located on the outer surface and the inner surface of the battery casing 10. In this manner, the first part 12 and the second part 13 may improve the strength of the battery casing 10, and may improve the overall structural strength of the middle part of the battery casing 10, so as to avoid breakage.

The communication channel 11 between the first part 12 and the second part 13 conveniently realizes the communication between the first cell 20 and the second cell 30, so as to ensure that the gas and the electrolyte may be conducted through the communication channel 11, so that the overall performance of the battery is uniform, and the electrolyte allows thorough infiltration. The first recess 14 and the second recess 15 correspond to the first part 12 and the second part 13 respectively, which may also ensure the overall structural strength of the middle part of the battery and avoid breakage.

In an embodiment, the first recess 14 is formed by stamping to form the first part 12 on the inner surface of the battery casing 10, and the second recess 15 is formed by stamping to form the second part 13 on the inner surface of the battery casing 10, in this way, not only the molding of the second part 12 and the second part 13 is facilitated, but also the molding effect of the battery casing 10 and ensures the structural strength of the battery casing 10 is improved.

In an embodiment, the partition structure is a reinforcing structure, and the partition structure may not only form the communication channel 11 to keep the internal environment of the first cell 20 and the second cell 30 to be in communication, but also improve the structural strength of the battery casing 10.

The first part 12 and the second part 13 of the partition structure are both reinforcing structures. For example, the first part 12 and the second part 13 may be reinforcing ribs, that is, a reinforcing structure is additionally formed inside the battery casing 10. Alternatively, by stamping the battery casing 10, the first part 12 and the second part 13 are formed, that is, the first part 12 and the second part 13 are reinforcing structures.

In an embodiment, the battery further includes at least one pole assembly 40, and the pole assembly 40 is disposed in the battery casing 10. At least one of the first recess 14 and the second recess 15 is used for accommodating a pole assembly of another battery. Therefore, when the batteries are grouped, the first recess 14 and the second recess 15 yield space for the pole assembly of another battery, so as to avoid collision with the pole assembly, thereby improving the space utilization rate when the batteries are grouped.

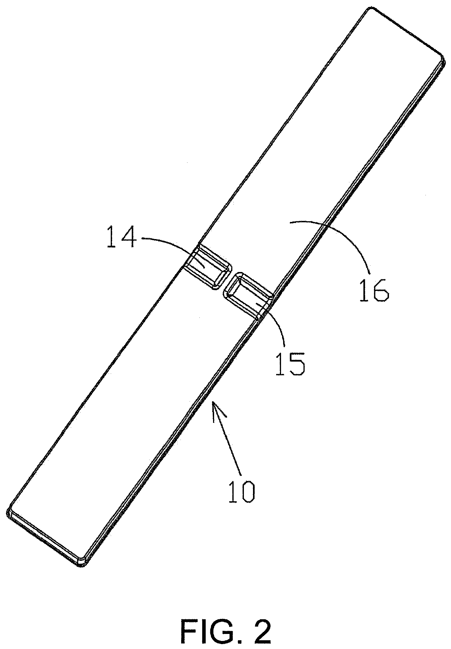

In an embodiment, the pole assemblies 40 are located outside the range of the first recess 14 and the second recess 15, that is, the pole assemblies 40 are not disposed in the first recess 14 and the second recess 15, and the pole assembly 40 may be provided in the manner of protruding from the battery casing 10, as shown in FIG. 1 and FIG. 2. Under the circumstances, when the batteries are grouped, the protruding pole assemblies 40 may be received in recesses of another battery.

In an embodiment, as shown in FIG. 1 and FIG. 2, the first recess 14 and the second recess 15 are provided on one side of the battery casing 10 away from the pole assemblies 40, such that the first recess 14 and the second recess 15 reliably realize accommodation of the pole assembly of another battery. Furthermore, it is possible to facilitate the subsequent connection of adjacent batteries, thereby improving the space utilization rate when the batteries are grouped.

The first recess 14 and the pole assembly 40 are respectively located on two opposite surfaces of the battery casing 10, and the second recess 15, the first recess 14 and the pole assembly 40 are respectively located on two opposite surfaces of the battery casing 10.

In an embodiment, the orthographic projection of the first recess 14 and the second recess 15 on the surface of the battery casing 10 on which the pole assembly 40 is disposed at least partially coincides with the pole assembly 40. That is, the projections of the first recess 14 and the second recess 15 and the pole assembly 40 on a surface perpendicular to the battery casing 10 at least partially coincide with one another. As such, when the batteries are grouped, the two batteries may be aligned with each other, and it may be ensured that the pole assembly of another battery may be reliably accommodated in the first recess 14 and the second recess 15, the consistency of the battery processing is ensured, and the processing is convenient.

It should be noted that, there may be two pole assemblies 40, and the two pole assemblies 40 may respectively correspond to the first recess 14 and the second recess 15.

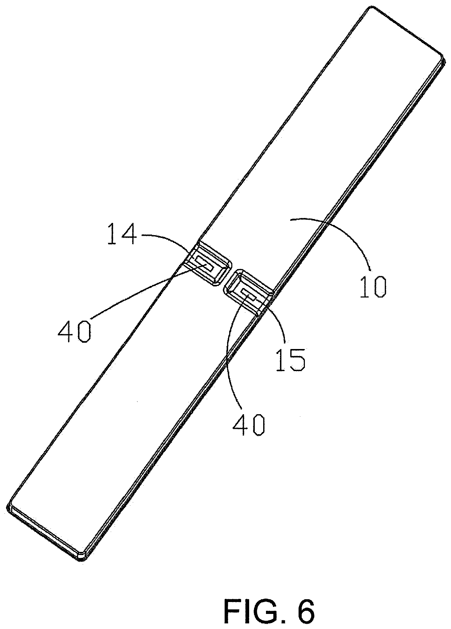

In an embodiment, as shown in FIG. 6, at least one of the first recess 14 and the second recess 15 is provided with a pole assembly 40, so that it is possible to prevent the pole assembly 40 from protruding from the battery casing 10 or reduce the protrusion of the pole assembly 40, thereby preventing the pole assemblies between adjacent batteries from affecting the space utilization rate of the battery group.

It should be noted that the battery may be formed by including a first cell 20 and a second cell 30, and the above-mentioned first recess 14 and second recess 15 may be located in the middle part of the battery casing 10.

In an embodiment, one end of the first recess 14 and one end of the second recess 15 respectively penetrate two opposite sides of the battery casing 10, which not only has a simple structure and is convenient for molding, but also facilitates the subsequent formation and matching with other structures.

In an embodiment, as shown in FIG. 1 and FIG. 2, the battery casing 10 includes two opposite first surfaces 16 and four second surfaces 17 disposed around the first surfaces 16. The area of each first surface 16 is larger than the area of each second surface 17. The first recess 14 and the second recess 15 are arranged on one of the first surfaces 16, so that the first part 12 and the second part 13 may be formed on the larger surface of the battery casing 10, which makes it convenient for the first cell 20 and the second cell 30 to communicate with each other through the communication channel 11.

The pole assembly 40 is disposed on the first surface 16, so as to ensure that the pole assembly 40 has a reliable supporting surface, thereby ensuring the stability of the pole assembly 40.

It should be noted that the two opposite first surfaces 16 are larger surfaces of the battery casing 10, while the four second surfaces 17 are smaller surfaces of the battery casing 10. The four second surfaces 17 include two pairs of smaller surfaces, which are, the first pair of smaller surfaces extending in the length direction of the battery casing 10 and the second pair of smaller surfaces extending in the width direction of the battery casing 10. Moreover, the area of each of the first pair of small surfaces should be larger than the area of each of the second pair of small surfaces, but both are smaller than the area of the larger surface.

In an embodiment, the first recess 14 and the second recess 15 respectively intersect with the two opposite second surfaces 17, which not only facilitates the formation of the first recess 14 and the second recess 15, but also ensures that the first recess 14 and the second recess 15 have a relatively large area, so as to conveniently accommodate the pole assembly.

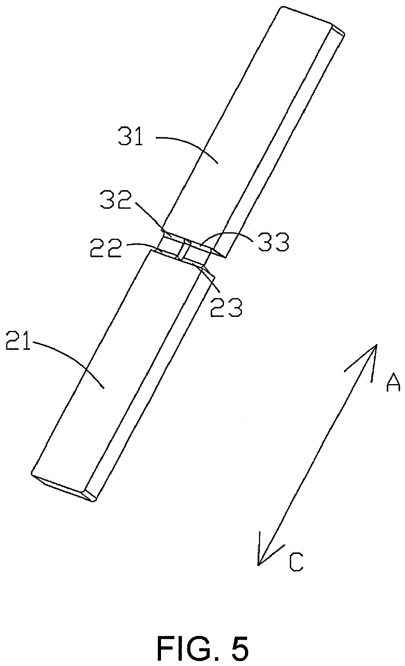

In an embodiment, as shown in FIG. 3 and FIG. 5, the first cell 20 includes a first cell body 21, a first positive electrode tab 22 and a first negative electrode tab 23. The first positive electrode tab 22 and the first negative electrode tab 23 extend from one end of the first cell body 21 in the first direction A. The second cell 30 includes a second cell body 31, a second positive electrode tab 32, and a second negative electrode tab 33. The second positive electrode tab 32 and the second negative electrode tab 33 extend from one end of the second cell body 31 in a third direction C. The first positive electrode tab 22 is electrically connected to the second positive electrode tab 32, and the first negative electrode tab 23 is electrically connected to the second negative electrode tab 33. The first direction A and the third direction C are opposite directions, so as to realize the parallel connection of the first cell 20 and the second cell 30. Moreover, the two electrode leading ends of the cell unit may be led out from the same side of the battery casing 10, so as to facilitate the assembly of the battery.

It should be noted that the first positive electrode tab 22 and the first negative electrode tab 23 extend from one end of the first cell body 21 in the first direction A, and the second positive electrode tab 32 and the second negative electrode tab 33 extend from one end of the second cell body 31 in the third direction C. The first direction A and the third direction C are opposite directions, and all of the first positive electrode tab 22, the first negative electrode tab 23, the second positive electrode tab 32, and the second negative electrode tab 33 are non-all-pole tab structures. However, because the first positive electrode tab 22 is electrically connected to the second positive electrode tab 32, and because the first negative electrode tab 23 is electrically connected to the second negative electrode tab 33, it may also be ensured that the tabs have sufficient overcurrent capability to ensure the safety performance of the battery.

In an embodiment, the first positive electrode tabs 22 and the second positive electrode tabs 32 are arranged opposite to each other, and the first negative electrode tab 23 and the second negative electrode tab 33 are arranged opposite to each other, such that it is convenient for the first positive electrode tab 22 and the second positive electrode tab 32 to realize connection, and convenient for the first negative electrode tab 23 and the second negative electrode tab 33 to realize connection.

The first positive electrode tab 22 and the second positive electrode tab 32 are disposed opposite to each other. When the first positive electrode tab 22 is flattened and is projected along the flattened second positive electrode tab 32, at least a part of the projection of the first positive electrode tab 22 is located on the second positive electrode tab 32. The first negative electrode tab 23 and the second negative electrode tab 33 are disposed opposite to each other. When the first negative electrode tab 23 is flattened and is projected along the flattened second negative electrode tab 33, at least a part of the projection of the first negative electrode tab 23 is located on the second negative electrode tab 33.

The first positive electrode tab 22 and the second positive electrode tab 32 are arranged opposite to each other, this may be regarded that the end portion of the first positive electrode tab 22 is directly opposite to the end portion of the second positive electrode tab 32. Under the circumstances, the end portion of the first positive electrode tab 22 and the end portion of the second positive electrode tab 32 may be arranged at intervals. The first positive electrode tab 22 and the second positive electrode tab 32 are electrically connected through an adapter sheet or a pole assembly, or the end portion of the first positive electrode tab 22 and the end portion of the second positive electrode tab 32 may be butted.

The first positive electrode tab 22 and the second positive electrode tab 32 are arranged opposite to each other, this may be regarded that part of the first positive electrode tab 22 and part of the second positive electrode tab 32 are overlapped, such that the first positive electrode tab 22 and the second positive electrode tab 22 are electrically connected.

Correspondingly, the first negative electrode tab 23 is disposed opposite to the second negative electrode tab 33, this may be regarded that the end portion of the first negative electrode tab 23 is directly opposite to the end portion of the second negative electrode tab 33. Alternatively, this may be regarded that part of the first negative electrode tab 23 is overlapped with part of the second negative electrode tab 33.

In an embodiment, as shown in FIG. 1 and FIG. 3, the battery further includes pole assemblies 40, and the pole assemblies 40 are disposed on the battery casing 10. The first positive electrode tab 22 and the second positive electrode tab 32 are both electrically connected to one of the pole assemblies 40, or the first negative pole tab 23 and the second negative pole tab 33 are both electrically connected to the other one of the pole assemblies 40. As such, one of the pole assemblies 40 may be used as an electrode leading end, and another electrode leading end may be formed through the battery casing 10 or another pole assembly 40.

In an embodiment, as shown in FIG. 1 and FIG. 3, there are two pole assemblies 40, the first positive electrode tab 22 and the second positive electrode tab 32 are both electrically connected to one pole assembly 40, and the first negative electrode tab 23 and the second negative electrode tab 33 are both electrically connected to the other pole assembly 40. As such, the two pole assemblies 40 may be used as two electrode leading ends of the battery respectively.

In some embodiments, the two pole assemblies 40 are located on the same side of the battery casing 10.

In some embodiments, the two pole assemblies 40 may be located on opposite sides of the battery casing 10.

In an embodiment, the battery casing 10 includes a steel case, the first negative electrode tab 23 and the second negative electrode tab 33 are both electrically connected to the steel case, and the first positive electrode tab 22 and the second positive electrode tab 32 are both electrically connected to the pole assembly 40, such that the battery casing 10 and the pole assembly 40 may be respectively used as two electrode leading ends of the battery, which not only has a simple structure, but also reduces the weight of the battery. The corrosion potential of the steel case is relatively high, so the electrical connection of the first negative electrode tab 23 and the second negative electrode tab 33 to the steel case may prevent a large amount of corrosion on the steel case, thus the safety performance of the battery is further improved.

In an embodiment, the battery casing 10 includes an aluminum case, the first positive electrode tab 22 and the second positive electrode tab 32 are both electrically connected to the aluminum case, and the first negative electrode tab 23 and the second negative electrode tab 33 are both electrically connected to the pole assembly 40. As such, the battery casing 10 and the pole assembly 40 may be respectively used as two electrode leading ends of the battery, which not only has a simple structure, but also reduces the weight of the battery. The corrosion potential of the aluminum case is lower, so the electrical connection between the first positive electrode tab 22 and the second positive electrode tab 32 to the aluminum case may avoid a large amount of corrosion on the aluminum case, and the safety performance of the battery is further improved.

In an embodiment, there are two pole assemblies 40, the first positive electrode tab 22 and the second positive electrode tab 32 are both electrically connected to one pole assembly 40, and the first negative electrode tab 23 and the second negative electrode tab 33 are both electrically connected to the other pole assembly 40. As such, the two pole assemblies 40 may be respectively used as two electrode leading ends of the battery.

In an embodiment, as shown in FIG. 1, the two pole assemblies 40 are disposed on the same first surface 16, which not only facilitates configuration, but also improves assembly efficiency and ensures that the pole assemblies 40 have a reliable supporting surface, so as to ensure the stability of the pole assemblies 40.

The pole assemblies 40 are located in the middle part of the first surface 16, so as to avoid the problem of a longer electrical connection path between the batteries if the pole assemblies 40 are disposed at the end portion.

In some embodiments, it is not excluded that the two pole assemblies 40 are respectively disposed on the two first surfaces 16.

In an embodiment, as shown in FIG. 3, the battery further includes a support portion 50, the support portion 50 is arranged in the battery casing 10, and the support portion 50 may be located between the pole assemblies 40 and the tab, which can not only realize support for the pole assemblies 40, and can be used for insulation protection between the tabs and the battery casing 10.

In an embodiment, as shown in FIG. 3, the battery casing 10 includes a first casing member 18 and a second casing member 19, and the second casing member 19 is connected to the first casing member 18. The first casing member 18 is a flat plate, and the partition structure is provided in the second casing member 19. The first casing member 18 and the second casing member 19 are arranged independently, which may facilitate the configuration of the cell unit and facilitate the processing.

In some embodiments, the first casing member 18 and the second casing member 19 may both be formed with accommodating cavities. After the first casing member 18 and the second casing member 19 are butted together, the cell unit is located in the cavities formed by the two accommodating cavities.

In some embodiments, the first casing member 18 is a flat plate, the second casing member 19 is formed with an accommodating cavity, and the cell unit is located in the accommodating cavity. The setting of the flat plate may facilitate subsequent connection, and the processing difficulty is low.

An embodiment of the present disclosure also provides a battery group, including the above-mentioned battery.

A battery group in an embodiment of the present disclosure includes a battery, and the battery includes a battery casing 10, a first cell 20, and a second cell 30. The first cell 20 and the second cell 30 are arranged in the battery casing 10, so as to meet the capacity requirement of the battery, and the difficulty of forming the cell may be reduced for the batteries with larger capacity requirement, thereby improving the performance of the battery. The partition structure is arranged in the battery casing 10, and the first cell 20 and the second cell 30 are respectively located on the first side and the second side of the partition structure. Through the configuration that the partition structure is formed with a communication channel 11, and the communication channel 11 penetrates the first side and the second side, the internal environment of the first cell 20 and the second cell 30 may be kept in communication, such that the electrolyte or gas in the internal environment of the first cell 20 and the second cell 30 may be substantially consistent. In this way, it may be ensured that the internal consistency of the battery is high, so as to improve the internal cycle performance of the battery, thereby ensuring the overall service life of the battery.

In an embodiment, the battery group is a battery module or a battery pack.

The battery module includes a plurality of batteries, and the battery module may further include an end plate and a lateral plate, and the end plate and the lateral plate are used for fixing the plurality of batteries.

It should be noted that a plurality of batteries may be formed into a battery module and then arranged in the battery box, and the plurality of batteries may be fixed by the end plates and the lateral plates. Multiple batteries may be directly arranged in the battery box, that is, there is no need to group multiple batteries, and under the circumstances, the end plates and the lateral plates may be removed.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery, comprising:
a battery casing (10), wherein a partition structure is arranged in the battery casing (10);
a first cell (20), wherein the first cell (20) is disposed in the battery casing (10), and at least a part of the first cell (20) is located on a first side of the partition structure; and
a second cell (30), wherein the second cell (30) is disposed in the battery casing (10), and at least a part of the second cell (30) is located on a second side of the partition structure, and the first side and the second side are disposed opposite to each other, such that the first cell (20) and the second cell (30) are arranged in a first direction (A);
wherein the partition structure is formed with a communication channel (11), and the communication channel (11) penetrates the first side and the second side.

2. The battery according to claim 1, wherein the communication channel (11) penetrates the first side and the second side in the first direction (A).

3. The battery according to claim 1, wherein the communication channel (11) separates the partition structure into a first part (12) and a second part (13) independent from each other, and the first part (12) and the second part (13) are arranged at intervals in a second direction (B).

4. The battery according to claim 3, wherein in the second direction (B), a length of the communication channel (11) is less than a length of the first part (12), and the length of the communication channel (11) is less than a length of the second part (13).

5. The battery according to claim 4, wherein in the second direction (B), the length of the first part (12) is equal to the length of the second part (13).

6. The battery according to claim 3, wherein a same outer surface of the battery casing is provided with a first recess (14) and a second recess (15), the first recess (14) and the second recess (15) are arranged at intervals, and the first recess (14) and the second recess (15) respectively correspond to the first part (12) and the second part (13), the first recess (14) and the first part (12) are respectively located on the outer surface and an inner surface of the battery casing (10), and the second recess (15) and the second part (13) are respectively located on the outer surface and the inner surface of the battery casing (10).

7. The battery according to claim 6, wherein the first recess (14) is formed by stamping to form the first part (12) on the inner surface of the battery casing (10), and the second recess (15) is formed by stamping to form the second part (13) on the inner surface of the battery casing (10).

8. The battery according to claim 6, wherein the battery further comprises at least one pole assembly (40), and the pole assembly (40) is disposed in the battery casing (10);
wherein at least one of the first recess (14) and the second recess (15) is configured for accommodating a pole assembly of another battery;
or, the pole assembly (40) of the battery is disposed in the at least one of the first recess (14) and the second recess (15).

9. The battery according to claim 6, wherein the battery casing (10) comprises two opposite first surfaces (16) and four second surfaces (17) disposed around the first surfaces (16), an area of each of the first surfaces (16) is larger than an area of each of the second surfaces (17),
wherein the first recess (14) and the second recess (15) are arranged on one of the first surfaces (16).

10. The battery according to claim 9, wherein the first recess (14) and the second recess (15) respectively intersect with two of the opposite second surfaces (17).

11. The battery according to any one of claims 6-10, wherein the partition structure is a reinforcing structure.

12. The battery according to any one of claims 3-10, wherein the second direction (B) is perpendicular to the first direction (A).

13. The battery according to any one of claims 1-10, wherein the first cell (20) comprises a first cell body (21), a first positive electrode tab (22) and a first negative electrode tab (23), the first positive electrode tab (22) and the first negative electrode tab (23) extend from one end of the first cell body (21) in the first direction (A);
the second cell (30) comprises a second cell body (31), a second positive electrode tab (32), and a second negative electrode tab (33), the second positive electrode tab (32) and the second negative electrode tab (33) extend from one end of the second cell body (31) in a third direction (C);
wherein the first positive electrode tab (22) is electrically connected to the second positive electrode tab (32), the first negative electrode tab (23) is electrically connected to the second negative electrode tab (33), and the first direction (A) is opposite to the third direction (C).

14. The battery according to any one of claims 1-10, wherein the battery casing (10) comprises:
a first casing member (18);
a second casing member (19), wherein the second casing member (19) is connected to the first casing member (18);
wherein the first casing member (18) is a flat plate, and the partition structure is disposed in the second casing member (19).
